Europäisches Patentamt

European Patent Office

Office européen des brevets

(19)

(11) Veröffentlichungsnummer: **0 001 409**
**B1**

(12) **EUROPÄISCHE PATENTSCHRIFT**

(21) Anmeldenummer: **78100896.6**

(51) Int. Cl.³: **F 16 D 7/04**

(22) Anmeldetag: **15.09.78**

(54) Überlastkupplung

(30) Priorität: **06.10.77 DE 2744908**

(43) Veröffentlichungstag der Anmeldung:
**18.04.79 Patentblatt 79/08**

(45) Bekanntmachung des Hinweises auf die Patenterteilung:
**12.11.80 Patentblatt 80/23**

(84) Benannte Vertragsstaaten:
**CH FR GB NL SE**

(56) Entgegenhaltungen:
**CH - A - 425 365
DE - C - 2 342 553
US - A - 4 004 667**

(73) Patentinhaber: **Ringspann Albrecht Maurer K.G.
Schaberweg 32—34
D - 6380 Bad Homburg 1 (DE)**

(72) Erfinder: **Maurer, Ruprecht, Dipl.-Ing.
Theodor-Storm-Strasse 20
D - 6380 Bad Homburg 1 (DE)
Mayer, Bernd
Silberweg 5
D - 6380 Bad Homburg 1 (DE)
Sebulke, Johannes, Dr.-Ing.
Ostpreussenstrasse 6
D - 6382 Friedrichsdorf 4 (DE)**

(74) Vertreter: **Lemcke, Rupert, Dipl.-Ing., et al
Amalienstrasse 28 Postfach 4026
D - 7500 Karlsruhe 1 (DE)**

Überlastkupplung

Überlastkupplungen mit den Merkmalen des Oberbegriffes des Hauptanspruches sind durch die US - A - 4,004,667 bekannt geworden. Dabei ist der Schnappring mit mehreren radial verlaufenden Blattfedern kombiniert, die die erforderliche Kraft zum Anpressen des verschiebbaren Kupplungselementes erzeugen. Die Blattfedern sind so ausgebildet, daß sie nach einem gewissen Auskuppelweg des verschiebbaren Kupplungselementes aktiv in eine zurückgezogene Stellung umschnappen und das Kupplungselement in ausgerückter Stellung festhalten. Wegen der Umschnappcharakteristik der Blattfedern nach vorgegebenem Federweg besteht hinsichtlich der Federbemessung nur wenig Variationsmöglichkeit, d.h., daß die Anpreßkraft und damit das zulässige Drehmoment der Überlastsicherung in engen Grenzen festliegt. Darüber hinaus kann man mit den umschnappbaren Blattfedern auch keine sehr hohen Anpreßkräfte erzeugen, so daß die bekannte Überlastsicherung für zahlreiche Anwendungsfälle im Maschinenbau zu schwach ist.

Hiervon ausgehend, liegt der vorliegenden Erfindung die Aufgabe zugrunde, eine Überlastsicherung zu entwickeln, bei der die Anpreßkraft der Feder in weitem Rahmen gewählt werden kann und mit der sich insbesondere auch sehr hohe Anpreßkräfte erzeugen lassen, ohne daß dadurch der Auskuppelvorgang beeinträchtigt wird.

Diese Aufgabe wird durch die im Patentanspruch 1 stehenden Merkmale gelöst. Durch die konstruktive Trennung des Schnappringes von der Anpreßfeder kann letztere optimal an das gewünschte Abschalt-Drehmoment der Überlastsicherung angepaßt werden. Ferner ergibt sich der Vorteil, daß das vorgegebene Abschalt-Drehmoment im Betrieb sehr genau eingehalten wird.

Zwar besteht auch bei der DE - C - 2 342 553 eine konstruktive Trennung zwischen der Anpreßfeder und dem umschnappenden Element. Dabei ist das umschnappende Element durch mehrere Kugeln gebildet, die beim Auslösen der Kupplung aus Rastzentrierungen des Kupplungsteils heraus in tiefere Fangbohrungen gedrückt werden. Für die Federung werden bereits zwei gegeneinanderliegende Tellerfedern verwendet.

Vorteilhafte Weiterbildungen des Erfindungsgedankens ergeben sich aus den Unteransprüchen. Im Zusammenhang mit Anspruch 5 ist darauf hinzuweisen daß der Schnappring grundsätzlich in jedes Teil der Kupplung einschnappen kann, das zur Aufnahme der Federkraft geeignet ist, ohne sie an die Kupplungsverzahnung weiterzulieten. Die konstruktive Gestaltung gemäß Anspruch 5 ist jedoch im allgemeinen am zweckmäßigsten.

Soll eine berührungslose Verdrehbarkeit der Kupplungselemente in ausgekuppeltem Zustand sichergestellt werden, so ergibt die Hinzuziehung der Merkmale des Anspruches 7 eine besonders vorteilhafte Lösung. Denn durch den beim Einschnappen freiwerdenden Bewegungsspielraum wird auf jeden Fall ein ausreichend großer Ausrückweg für das verschiebbare Kupplungselement zur Verfügung gestellt. Auch hier ist sowohl ein radiales Einwärts- wie auch ein radiales Auswärtsschnappen möglich. Wesentlich ist dabei lediglich, daß sich zumindest eines der beiden Nachbarteile des Schnappringes in eine diesen überlappende Stellung verschieben kann, so daß sich der gewünschte Bewegungsspielraum ergibt.

Die Ansprüche 12 bis 17 beschreiben verschiedene konstruktive Ausgestaltungen des erfindungsgemäßen Prinzips für verschiedene Anwendungsfälle.

In der nachfolgenden Beschreibung werden Ausführungsbeispielen der Erfindung beschrieben; dabei zeigt:

Fig. 1 die Überlastkupplung zwischen einem Zahnrad und einer Nabe, wobei das Zahnrad während des Ausrückvorganges in seiner Laufebene bleibt;

Fig. 2 eine Überlastkupplung zwischen einem Zahnrad und einer Nabe, wobei das Zahnrad die Ausrückbewegung durchführt;

Fig. 3 die Überlastkupplung zwischen zwei koaxialen Wellen;

Fig. 4, 5 und 6 ähnliche Bauformen, wobei jedoch jeweils die Kupplungselemente in ausgerücktem Zustand berührungsfrei gegeneinander verdrehbar sind.

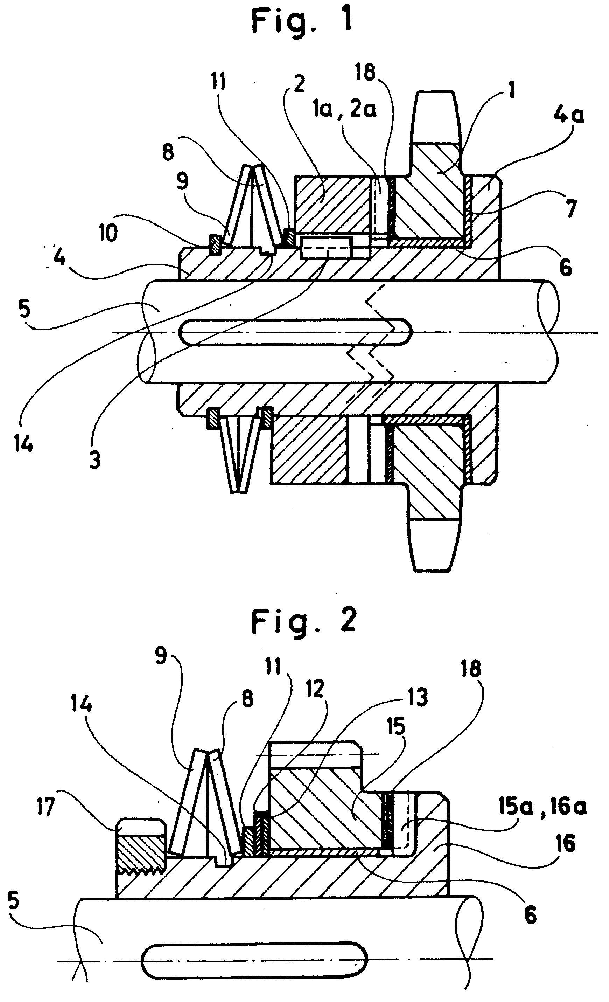

In Fig. 1 sitzt die erfindungsgemäße Überlastkupplung zwischen einem Zahnrad 1 und einem Mitnehmerring 2. Letzterer ist über eine Paßfeder 3 und eine Nabe 4 drehfest mit der Welle 5 verbunden. Auf der zylindrischen Außenfläche der Nabe 4 ist das Zahnrad 1 unter Zwischenlage einer Buchse 6 gelagert. Es stützt sich an der einem Seite unter Zwischenlage einer Scheibe 7 an einem radial vorstehanden Bund 4a der Nabe 4 ab. Die Buchse 6 und die Scheibe 7 sind aus einem Kunststoff mit niedrigem Reibungskoeffizient, beispielsweise aus Polytetrafluoräthylen. An seiner anderen Seite sitzt die Kupplungsverzahnung 1a, die mit der entsprechenden Gegenverzahnung 2a des Mitnehmerringes 2 in Eingriff steht.

Die axiale Anpressung der beiden Kupplungselemente erfolgt durch zwei gegeneinander gestellte Tellerfedern 8 und 9, die sich einerseits an einem in die Nabe 4 eingelassenen Sicherungsring 10, andererseits an einem axial verschiebbaren Schnappring 11 abstützen. Der Schnappring 11 wirkt seinerseits auf den axial auf der Nabe 4 verschiebbaren Mitnehmerring 2 ein.

Ausgehend von der in der oberen Bildhälfte dargestellten eingekuppelten Stellung ergibt sich folgende Funktion:

In der Kupplungsverzahnung 1a, 2a stellt sich aufgrund der schrägen Flanken der Kupplungsverzahnung eine vom übertragenen Drehmoment abhängige Axialkraft ein, die im Auskuppelsinn wirkt Diese Axialkraft wird im Normalbetrieb von den beiden Tellerfedern 8 und 9 kompensiert, die entsprechend dem höchstzulässigen Drehmoment vorgespannt sind. Beim Überschreiten des zulässigen Drehmomentes wird der Mitnehmerring 2 allmählich nach links aus seiner Verzahnung mit dem Zahnrad 1 herausgedrückt, wobei er den Schnappring 11 mitnimmt. Gegen Ende des Ausrückweges befindet sich der Schnappring 11 gerade über einer Nut 14 der Nabe 4, in die er aufgrund seiner Eigenspannung einrastet. Dieser Zustand ist auf der unteren Bildhälfte von Fig. 1 dargestellt. Dadurch wird die Federkraft in die Nabe 4 zurückgeleitet und die Kupplung bleibt ausgerückt.

Allerdings kommt es bei dieser Konstruktion noch zu einem Ratschen der sich gegeneinander verdrehenden Kupplungselemente, da das Einrasten des Schnappringes 11 in die Nut 14 aus Sicherheitsgründen kurz vor Erreichen der vollständigen Ausrückung erfolgen muß. Um dieses Ratschen abzustellen, kann zwischen die Zähne der Kupplungsverzahnung eine Zwischenlage 18, beispielsweise aus niedrig schmelzendem Kunststoff, eingelegt werden, deren Dicke so bemessen ist, daß bei Entfernen dieser Zwischenlage keine Berührung der Zahnspitzen mehr stattfindet. Durch die beim Durchratschen entstehende Reibungswärme an der Kupplungsverzahnung schmilzt der Kunststoffring an den Zahnspitzen ab, so daß keine Berührung mehr zwischen dem drehenden und dem stillstehenden Teil vorliegt.

Fig. 2 zeigt das gleiche Kupplungsprinzip in vereinfachter Konstruktion, wobei das Zahnrad selbst die Ausrückbewegung durchführt. Aus Übersichtlichkeitsgründen sind hier wie in den folgenden Fig. gleiche Teile mit denselben Bezugszeichen wie in Fig. 1 versehen. Die Kupplung sitzt bei dieser Ausführungsform zwischen einem Zahnrad 15 und dessen Nabe 16. Die Nabe 16 ist ihrerseits wiederum drehfest mit der Welle 5 verbunden.

Das Zahnrad 15 ist unter Zwischenlage einer Lagerbuchse 6 auf der zylindrichen Außenfläche der Nabe 16 gelagert. An seiner einen Seitenfläche weist es die Kupplungsverzahnung 15a auf, die mit der entsprechenden Gegenverzahnung 16a eines radial vorspringenden Bundes der Nabe 16 in Eingriff steht. An seiner gegenüberliegenden Seite sitzen ein Schmelzring 13, eine Zwischenscheibe 12 und der Schnappring 11, die allesamt mit dem Zahnrad 15 axial verschiebbar sind, sowie die beiden Tellerfedern 8 und 9, die mittels einer Nutmutter 17 auf den gewünschten Anpreßwert vorgespannt sind.

Beim Überschreiten des zulässigen Drehmomentes übersteigt die in der Kupplungsverzahnung 15a, 16a erzeugte Axialkraft die Anpreßkraft der Tellerfedern 8 und 9, so daß das Zahnrad 15 aus der Verzahnung herausgeschoben wird. Gegen Ende des Ausrückweges befindet sich wiederum der Schnappring 11 über der in die Nabe 16 eingelassenen Nut 14 und rastet radial in diese ein. Die Tellerfedern können somit das Zahnrad 15 nicht mehr in die Verzahnung drücken und die Kupplung bleibt ausgeschaltet. Die Zahnspitzen der Kupplungsverzahnung 15a, 16a ratschen aber wegen der unvermeidlichen Fertigungstoleranzen noch aneinander. Um dies abzustellen, ist der Ring 13 beispielsweise als Lotring ausgebildet oder aus einem niedrig schmelzenden Kunststoff hergestellt, so daß er durch die entstehende Reibungswärme an der Kupplungsverzahnung alsbald schmilzt und den notwendigen Axialweg zum vollständigen Auskuppeln freigibt. Anstelle dieses Schmelzringes oder zusätzlich hierzu kann zwischen die Zähne der Kupplungsverzahnung eine Folie z.B. aus Kunststoff eingelegt werden. Eine solche Einlage, z.B. aus Tetrafluoräthylen, hat erfindungsgemäß noch einen weiteren Zweck. Denn da die Zwischenlage Passungsrost verhindert, den Reibwert der Verzahnung erniedrigt und diesen Reibwert auch bei ungünstigen Umgebungseinflüssen, wie beispielsweise Feuchtigkeit, weitgehend konstant hält, wird die Abschaltgenauigkeit der Kupplung erhöht und auch über lange Zeit konstant gehalten.

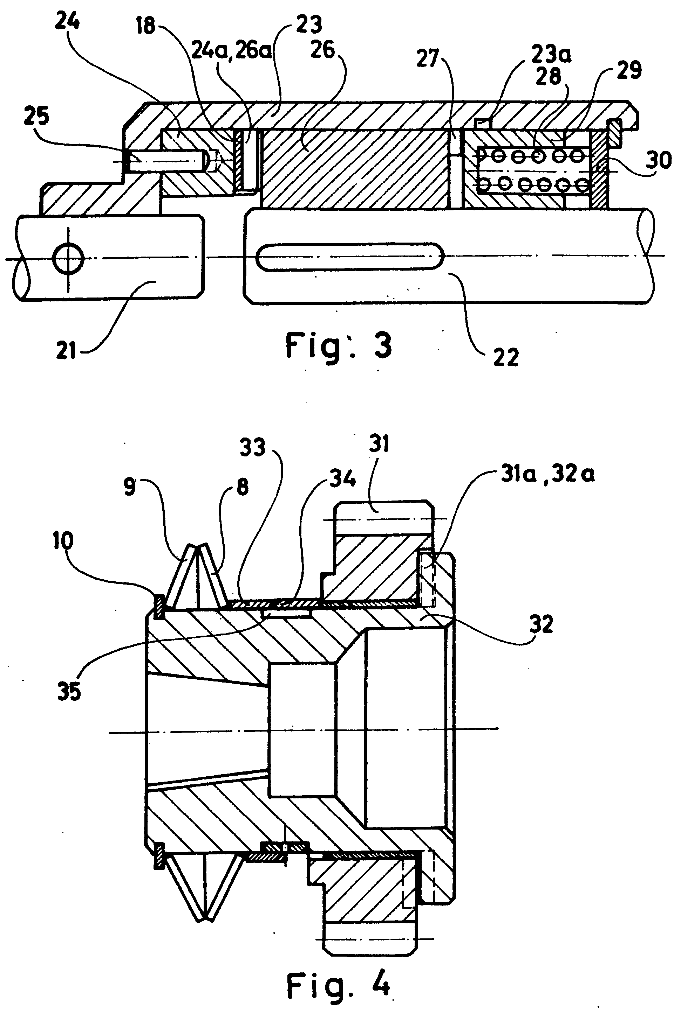

Fig. 3 zeigt die Verbindung zweier miteinander fluchtender Wellen 21 und 22. Die eine Welle 21 trägt eine mit ihr fest verbundene Hülse 23, die sich radial erweitert und in dieser Erweiterung das eine Kupplungselement in Form eines Zahnkranzes 24 enthält. Der Zahnkranz 24 ist durch mehrere Stifte 25 fest mit der Hülse 23 verbunden. In axialer Verlängerung der Hülse 23 überdeckt diese das andere Kupplungselement in Form eines mit der Welle 22 drehfest, aber axial verschiebbar verbundenen Mitnehmerringes 26. Dieser Mitnehmerring 26 weist an der dem anderen Kupplungselement zugewandten Seite eine entsprechende Verzahnung auf, über die er mit dem Zahnkranz 24 in Eingriff steht. An der anderen Seite des Mitnehmerringes 26 sitzt ein Schnappring 27, an den sich mehrere Druckfedern 28 anschließen. Diese Druckfedern sitzen in einem Führungsring 29, dessen Druckfläche dem Schnappring 27 zugewandt ist. An ihrem anderen Ende stützen sich die Federn 28 an einer mit der Hülse 23 verbundenen Scheibe 30 ab. Zwar könnte diese Scheibe 30 auch mit der Welle 22 verbunden sein; doch hat die zeichnerische Anordnung den Vorteil, daß axiale Relativbewegungen der Wellen relativ zueinander keinerlei Einfluß auf die Ansprechgenauigkeit der Kupplung haben. Die Axialposition der Scheibe 30 ist so bemessen, daß die Druckfedern 28 auf die gewünschte Axialkraft entsprechende dem maximal zulässigen Drehmoment vorgespannt sind. Beim Überschreiten dieses Momentes wird der Mitnehmerring 26 aus der Kupplungsverzahnung herausgedrückt, wobei wiederum der Schnappring 27 gegen Ende der Ausrückbewegung in eine Nut einschnappt und so die Federanpressung abfängt. Diese Nut 23a ist in der Hülse 23 vorgesehen, der Schnappring 27 muß hier also im Gegensatz zu den vorbeschriebenen Beispielen unter einer Spreizspannung stehen. Zwar könnte die Nut auch in der Welle 22 vorgesehen sein, so daß der Schnappring radial einwärts schnappt, doch müßte aus den vorgenannten Gründen sichergestellt sein, daß es zwischen den beiden Wellen zu keinen Axialverschiebungen kommt.

Fig. 4 zeigt eine Bauform der erfindungsgemäßen Kupplung, bei der die Kupplungselemente im Überlastungsfall sofort vollständig ausrücken. Als Kupplungselemente fungieren hier ein Zahnrad 31 und seine zugehörige Nabe 32. Das Zahnrad 31 ist ebenso wie in Fig. 2 verschiebbar und verdrehbar auf der Nabe gelagert, wird jedoch durch die beiden Tellerfedern 8 und 9 in die Kupplungsverzahnung 31a, 32a mit der Nabe 32 gedrückt. Zwischen dem Zahnrad und den beiden Tellerfedern sitzt eine Buchse 33, und der Schnappring, der hier die Form eines aus Federbandstahl gerollten Ringes 34 mit einem nicht dargestellten Querschlitz hat. Im Überlastungsfall schnappt der Ring 34 entsprechend der unteren Hälfte von Fig. 4 in die Ringnut 35 der Nabe 32 ein. wobei durch Anpassung der Nuttiefe an die Ringstärke sichergestellt ist, daß die Buchse 33 über den eingeschnappten Ring 34 hinweggleiten kann. Dadurch wird die Vorspannung der Tellerfedern aufgehoben und es verbleibt noch genügend axialer Spielraum, daß das Zahnrad 31 vollkommen aus der Verzahnung ausrücken kann.

Um den Einfluß der durch die Tellerfederkraft erzeugten Reibung an den Stirnseiten des Schnappringes 34 zu verringern, können diese leicht geschrägt werden, so daß sich eine nach innen gerichtete Radialkraftkomponente ergibt, die das Einschnappen begünstigt.

Die Buchse 33 kann ebenfalls als geschlitzter Federring ausgebildet sein. In diesem Fall ist es möglich, daß er ebenfalls eine gewisse radiale Anpressung auf die Nabe ausübt, um die entspannten Tellerfedern in ihrer Position zu halten.

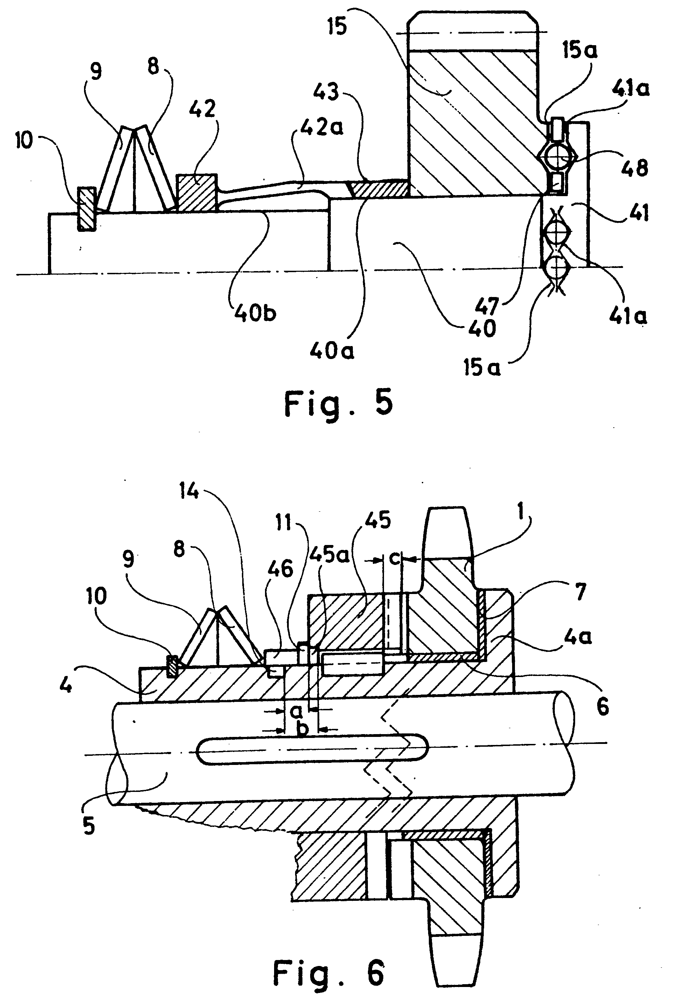

Fig. 5 zeigt eine andere Variante, bei der die Kupplungselemente ebenfalls außer Eingriff gelangen. Hier sitzt die erfindungsgemäße Überlastkupplung unmittelbar zwischen einer Welle 40 und dem Zahnrad 15. Am Ende der Welle 40 sitzt eine Scheibe 41, die an ihrer dem Zahnrad 15 zugewandten Seitenfläche eine Radialverzahnung 41a aufweist. Mit dieser steht die Verzahnung 15a des Zahnrades 15 in Eingriff. Das Zahnrad selbst ist ähnlich wie in Fig. 2 verdrehbar und verschiebbar auf der Welle 40 gelagert, wird jedoch durch die Tellerfedern 8 und 9, die sich an einem in die Welle eingelassenen Sicherungsring 10 abstützen, gegen die verzahnte Scheibe 41 gepreßt. Die Übertragung der Anpreßkraft erfolgt durch einen Schnappring 42 und einen sich hieran axial anschließenden Druckring 43. Der Schnappring 42 weist eine Vielzahl über den Ringumfang verteilter und etwa axial verlaufender Federsegmente 42a auf, deren freie Enden auf einer Durchmessererweiterung 40a der Welle aufliegen und hiergegen radial verspannt sind. Die Durchmessererweiterung ist relativ zur Kupplungsverzahnung so positioniert, daß sie vor Durchlaufen des Ausrückweges der Kupplungsverzahnung von den Federsegmenten des Schnappringes 42a passiert wird, so daß diese sich unter ihrer Eigenspannung an den Wellenabschnitt 40b mit dem geringeren Durchmesser anlegen. Der Durchmesserunterschied ist so auf die Stärke der Federsegmente abgestimmt, daß der Druckring 43 über die eingeschnappten Federsegmente hinweggleiten kann, um dem Zahnrad 15 das vollständige Ausrücken aus der Kupplungsverzahnung zu erlauben. Die Anpreßfedern 8 und 9 bleiben dabeie im Gegensatz zu Fig. 4 gespannt.

Um den Einfluß der Reibung auf die Einschnappbewegung der Zinken zu verhindern, sind die Kontaktflächen der Federsegmente sowie des Druckringes 43 geneigt, so daß die Federsegmente einer gewissen im Einschnappsinn wirkenden Radialkraft unterworfen sind.

Anstelle des mit Federsegmenten versehenen Schnappringes könnte auch ein einfacher gespreizter Spannring verwendet werden, dessen Außendurchmesser in eingeschnapptem Zustand mit dem Durchmesser des Wellenabschnittes 40a fluchtet. Durch entsprechende Ausbildung dieses Ringes kann der vor dem Umschnappen bestehenden Verkantungsgefahr entgegengewirkt werden.

Fig. 5 zeigt außerdem, daß zwischen den Zahnflächen 15a und 41a ein Käfig 47 mit Rollkörpern 48 angeordnet werden kann. Dadurch ist die Ausrückbewegung mit geringeren Reibungskräften behaftet und die Ansprechgenauigkeit der Kupplung erhöht.

Wünscht man bei der Konstruktion gemäß Fig. 5 die Axialverschiebung des Zahnrades während des Ausrückvorganges zu verhindern, so wird mit einem zusätzlichen Mitnehmerring entsprechend Fig. 1 oder Fig. 6 gearbeitet.

Fig. 6 entspricht in der Anordnung seiner Kupplungselemente weitgehend Fig. 1. Nur das Einschnappprinzip wurde geändert, um genügend axialen Spielraum für das berührungslose Gegeneinanderdrehen der Kupplungselemente in ausgerücktem Zustand zu schaffen. Hierzu weist der Mitnehmerring 45 im Unterschied zum Mitnehmerring in Fig. 1 an seiner dem Schnappring 11 benachbarten Ringfläche eine Ausdrehung 45a auf, deren Außendurchmesser so bemessen ist, daß er etwas größer als der Außendurchmesser des Schnappringes 11 ist, wenn dieser in die Nut 14 eingeschnappt ist. Entsprechend der axialen Tiefe der Ausdrehung 45a ergibt sich somit beim Einrasten des Schnappringes 11 in die Nut 14 zusätzlicher axialer Spielraum für den Mitnehmerring 45, so daß dieser vollständig außer Eingriff mit der Kupplungsverzahnung des Zahnrades 1 gelangt.

Zwischen dem Schnappring 11 und der Tellerfeder 8 sitzt noch ein Distanzring 46, der einerseits zur Abdeckung der Nut 14 dient und andererseits die Positionierung der Tellerfeder 8 außerhalb des Nutbereiches ermöglicht, so daß diese stets zuverlässig auf der Nabe 4 geführt ist.

Die in den Fig. 4 bis 6 beschriebenen Konstruktionen haben nicht nur den bereits genannten Vorteil der vollständigen Ausrückbarkeit der Kupplungselemente, sondern auch den Vorteil des frei wählbaren axialen Schaltweges. Während bei den Fig. 1 bis 3 nahezu der gesamte Ausrückweg der Kupplungsverzahnung durchfahren werden muß, ehe der Schnappring einrasten darf, besteht bei den drei letzten Konstruktionen die Möglichkeit, den Auskuppelvorgang bereits dann auszulösen, wenn die Verzahnung erst einen Bruchteil des Gesamtausrückweges zurückgelegt hat. Der in Fig. 6 eingetragene Schaltweg a kann also erheblich kleiner als die Verzahungstiefe c sein. Wesentlich ist lediglich, daß die Größe b, nämlich die Summe aus dem Schaltweg und dem beim Einschnappen freiwerdenden axialent Spielraum größer ist als die Verzahnungstiefe c.

Selbstverständlich lassen sich die Schnappkonstruktionen gemäß den Fig. 4 bis 6 gleichermaßen anwenden, wenn die Schnappring nicht einwärts in eine Wellennut, sondern auswärts in die Nut eines Hohlzylinders einschnappen sollen. Die Schnappringe sind in diesem Fall lediglich in umgekehrter Richtung vorzuspannen.

Zur Inbetriebnahme der Kupplung braucht bei den Konstruktionen gemäß Fig. 1, 2, 5 und 6 lediglich der Schnappring mit einem entsprechenden Werkzeug gespreizt und aus seiner Nut bzw. dem Wellenabsatz herausgehoben zu werden. In Fig. 3 und 4 müssen zuvor die Federn aus dem Bereich des Spreizringes axial entfernt werden; das heißt, sie müssen gespannt oder demontiert werden. Bei den Ausführungen mit Schmelzring muß dieser bei Wiederinbetriebnahme erneuert werden.

Zusammenfassen bietet die Erfindung den Vorteil, daß man durch die geschickte Anordnung des Schnappringes eine formschüssig arbeitende Überlastsicherung hoher Zuverlässigkeit und Genauigkeit erhält, die nach dem Auskuppeln auf einfache Weise wieder in Betrieb genommen werden kann.

**Patentansprüche**

1. Überlastsicherung in Form einer bei Überschreiten eines bestimmten Drehmomentes ausrückenden, formschlüssigen Kupplung aus zwei koaxial abgeordneten und an ihren einander zugewandten Stirnflächen eine bei Drehmomentübertragung eine Axialkraftkomponente erzeugende Verzahnung aufweisenden Kupplungselementen, von dene zumindest das eine axial verschiebbar und durch Federkraft mit dem anderen in Eingriff gehalten ist, wobei die Federkraft über einen axial verschiebbaren Schnappring auf das verschiebbare Kupplungselement einwirkt und dieser Schnappring nach einem Auskuppelweg, der höchstens gleich der Eingriffstiefe der Kupplungsverzahnung ist, in eine die Anpressung zwischen den Kupplungselementen aufhebende Stellung umschnappt, dadurch gekennzeichnet, daß der Schnappring (11, 27, 34, 42) in Radialrichtung federnd ausgebildet ist und in der Auskuppelstellung hinter einen in Umfangsrichtung umlaufenden Absatz (14, 23a, 35) eines Kupplungsbauteiles in eine den Kraftfluß zwischen dem verschiebbarn Kupplungselement (2, 15, 26, 31, 45) und einer separaten Anpreßfeder (8, 9, 28) unterbrechende Stellung schnappt.

2. Überlastsicherung nach Anspruch 1, dadurch gekennzeichnet, daß der Schnappring ein Sprengring (11, 27) ist.

3. Überlastsicherung nach Anspruch 2, dadurch gekennzeichnet, daß der Absatz durch eine Nut (14, 23a, 35) gebildet ist.

4. Überlastsicherung nach Anspruch 1, dadurch gekennzeichnet, daß der Schnappring (42) zahlreiche sich etwa axial erstreckende Federsegmente (42a) aufweist, die in Radialrichtung verspannbar sind.

5. Überlastsicherung nach einem der vorhergehenden Ansprüche, dadurch gekennzeichnet, daß der Schanppring (11, 27, 34, 42) in ein Kupplungsteil (4, 16, 23, 32, 40) einschnappbar ist, gegen welches sich die Reaktionskraft der Feder (8, 9, 28) abstützt.

6. Überlastsicherung nach einem der vorhergehenden Ansprüche, dadurch gekennzeichnet, daß der Schnappring (11, 27, 42) in eingeschnappter Stellung die Anpreßkraft der Feder (8, 9, 28) in den Absatz (14, 23a) des Kupplungsteiles (4, 23, 40) einleitet.

7. Überlastsicherung nach einem der Ansprüche 1 bis 5, dadurch gekennzeichnet, daß die radiale Einschnapptiefe so bemessen ist, daß der Schnappring (34, 42, 11) aus seiner axialen Wirkverbindung mit zumindest dem einen seiner beiden axial benachbarten Teile (31, 33; 43; 45) herausschnappt und diesem Teil axialen Bewegungsspielraum gibt.

8. Überlastsicherung nach Anspruch 7, dadurch gekennzeichnet, daß das dem Schnappring (11) benanchbarte Teil (45) eine Ausdrehung (45a) aufweist und daß der Außendurchmesser des Schnappringes in der nicht eingeschnappten Stellung größer und in der eingeschnappten Stellung kleiner als der Außendurchmesser der Ausdrehung (45a) ist.

9. Überlastsicherung nach einem der vorhergehenden Ansprüche, dadurch gekennzeichnet, daß der Schnappring (42) und das ihm benachbarte Teil (43) schräge Kontaktflächen zur Unterstützung der radialen Schnappbewegung aufweisen.

10. Überlastsicherung nach Anspruch 9, dadurch gekennzeichnet, daß der Schnappring ein flacher, bandförmiger, geschlitzter Federring (34) ist.

11. Überlastsicherung nach Anspruch 10, dadurch gekennzeichnet, daß der Schnappring (34) aus gerolltem Federbandstahl besteht.

12. Überlastsicherung nach einem der vorhergehenden Ansprüche, wobei das eine Kupplungselement als ein auf einer Nabe verdrehbar gelagertes Antriebsrad ausgebildet ist, dadurch gekennzeichnet, daß das andere Kupplungselement ein mit seiner verzahnten Ringfläche mit dem Antriebsrad (1) in Eingriff stehender Mitnehmerring (2, 45) ist, der auf der Nabe (4) drehfest, aber axial verschiebbar geführt und durch die Feder (8, 9) axial gegen das Antriebsrad (1) gedrückt ist.

13. Überlastsicherung nach Anspruch 12, dadurch gekennzeichnet, daß der Schnappring (11) zwischen dem Mitnehmerring (2, 45) und der Feder (8, 9) auf der eine Nut (14) tragenden Nabe (4) angeordnet ist.

14. Überlastsicherung nach einem der Ansprüche 1 bis 11, wobei das eine Kupplungselement als Nabe, das andere als ein heirauf gelagertes Antriebsrad ausgebildet ist, dadurch gekennzeichnet, daß das Antriebsrad (15, 31) verdrehbar und axial verschiebbar auf der Nabe (16, 32) gelagert und durch die Feder (8, 9) mit seiner Verzahnung (15a, 31a) gegen einen verzahnten Bund (16) der Nabe gedrückt ist.

15. Überlastsicherung nach Anspruch 14, dadurch gekennzeichnet, daß der Schnappring (11, 34) zwischen dem Antriebsrad (15, 31) und der Feder (8, 9) auf der eine Nut (14, 35) tragenden Nabe (16, 32) angeordent ist.

16. Überlastsicherung nach einem der Ansprüche 1 bis 11, wobei die Kupplungselemente in Form zweier Zahnkränze an zwei koaxialen Wellenenden sitzen, dadurch gekennzeichnet, daß sich der verschiebbare, auf seiner zugehörigen Welle (22) gelagerte Zahnkranz (26) mit seiner der Verzahnung (26a) abgewandten Stirnseite an der Feder (28) abstützt, die sich ihrerseits an einem axial fixierten Haltering (30) abstützt.

17. Überlastsicherung nach Anspruch 16, dadurch gekennzeichnet, daß der unverschiebbar mit seiner Welle (21) verbundene Zahnkranz (24) eine Hülse (23) aufweist, die den anderen Zahnkranz (26) übergreift und in der der Haltering (30) sowie die Nut (23a) angeordnet ist.

18. Überlastsicherung nach einem der vorhergehenden Ansprüche, dadurch gekennzeichnet, daß die Anpressung durch zumindest eine Tellerfeder (8, 9) erfolgt.

19. Überlastsicherung nach einem der vorhergehenden Ansprüche, dadurch gekennzeichnet, daß die Kupplungsverzahnung (1a, 2a; 15a, 16a; 24a, 26a; 31a, 32a; 15a, 41a) eine Planverzahnung ist.

20. Überlastsicherung nach einem der vorhergehenden Ansprüche, dadurch gekennzeichnet, daß zwischen den Kupplungsverzahnungen (15a, 16a) eine Zwischenlage (18) mit niedrigem Reibwert angeordnet ist.

21. Überlastsicherung nach Anspruch 20, dadurch gekennzeichnet, daß die Zwischenlage (18) aus Polytetraflouräthylen besteht.

22. Überlastsicherung nach einem der vorhergehenden Ansprüche, dadurch gekennzeichnet, daß zwischen den sich in ausgekuppeltem Zustand gegeneinander verdrehenden Teilen (11, 15) ein Ring (13) aus einem bei bereits niedriger Temperatur schmelzenden Material angeordnet ist.

23. Überlastsicherung nach Anspruch 22, dadurch gekennzeichnet, daß der Ring (13) aus Lot besteht.

24. Überlastsicherung nach Anspruch 22, dadurch gekennzeichnet, daß der Ring (13) aus Kunststoff besteht.

25. Überlastsicherung nach einem der Ansprüche 1 bis 19 und 22 bis 24, dadurch gekennzeichnet, daß die Verzahnung (15a, 41a) der Kupplungselemente (15, 41) aus in Umfangsrichtung geneigten Anlaufflächen an den benachbarten Stirnseiten besteht, zwischen denen Rollkörper (48) angeordnet sind.

26. Überlastsicherung nach Anspruch 25, dadurch gekennzeichnet, daß zwischen den Kupplungselementen (15, 41) ein die Rollkörper (48) haltender Käfigring (47) angeordnet ist.

**Claims**

1. Overload safety device in the form of a shape-engaging coupling, disengaging on exceeding of a specific torque, of two coaxially arranged coupling elements having on their mutually facing end faces a toothing which generates an axial force component in torque transmission, of which elements at least the one is axially displaceable and held by spring force in engagement with the other, where the spring force acts through an axially displaceable snap ring upon the displaceable couling element, and this snap ring, after an uncoupling distance which is at maximum equal to the depth of engagement of the coupling toothing, snaps over into a position eliminating the application pressure between the coupling elements, characterised in that the snap ring (11, 27, 34, 42) is made resilient in the radial direction and in the uncoupling position snaps behind a shoulder (14, 23a, 35), extending around in the circumferential direction, of a coupling component into a position interrupting the force flux between the displaceable coupling element (2, 15, 26, 31, 45) and a separate pressure spring (8, 9, 28).

2. Overload safety device according to Claim 1, characterised in that the snap ring is a circlip (11, 27).

3. Overload safety device according to Claim 2, characterised in that the shoulder is formed by a groove (14, 23a, 35).

4. Overload safety device according to Claim 1, characterised in that the snap ring (42) comprises numerous approximately axially extending spring segments (42a) which are tensioned in the radial direction.

5. Overload safety device according to any one of the preceding Claims, characterised in that the snap ring (11, 27, 34, 42) is snappable into a coupling part (4, 16, 23, 32, 40) against which the reaction force of the spring (8, 9, 28) bears.

6. Overload safety device according to any one of the preceding Claims, characterised in that the snap ring (11, 27, 42) in the snapped-in position introduces the pressing force of the spring (8, 9, 28) into the shoulder (14, 23a) of the coupling part (4, 23, 40).

7. Overload safety device according to any one of Claims 1 to 5, characterised in that the radial snap-in depth is dimensioned so that the snap ring (34, 42, 11) snaps out of its axial operative connection with at least the one of its two axially adjacent parts (31, 33; 43; 45) and gives axial movement clearance to this part.

8. Overload safety device according to Claim 7, characterised in that the part (45) adjacent to the snap ring (11) comprises a turned recess (45a) and in that the external diameter of the snap ring in the non-snapped-in position is greater, and in the snapped-in position is smaller, than the external diameter of the turned recess (45a).

9. Overload safety device according to any one of the preceding Claims, characterised in that the snap ring (42) and the part (43) adjacent to it comprise oblique contact faces to support the radial snapping movement.

10. Overload safety device according to Claim 9, characterised in that the snap ring is a flat, slotted, spring ring (34) of strip form.

11. Overload safety device according to Claim 10, characterised in that the snap ring (34) consists of rolled spring steel strip.

12. Overload safety device according to any one of the preceding Claims, where the one coupling element is formed as a drive wheel rotatably mounted on a hub, characterised in that the other coupling element is an engaging ring (2, 45) which is in engagement by its toothed ring face with the drive wheel (1), is guided fast in rotation but axially displaceably on the hub (4) and is pressed axially by the spring (8, 9) against the drive wheel (1).

13. Overload safety device according to Claim 12, characterised in that the snap ring (11) is arranged between the engaging ring (2, 45) and the spring (8, 9) on the hub (4) which carries a groove (14).

14. Overload safety device according to any one of Claims 1 to 11, where the one coupling element is formed as hub and the other as a drive wheel mounted thereon, characterised in that the drive wheel (15, 31) is mounted rotatably and axially displaceably on the hub (16, 32) and is pressed by the spring (8, 9) with its toothing (15a, 31a) against a toothed collar (16) of the hub.

15. Overload safety device according to Claim 14, characterised in that the snap ring (11, 34) is arranged between the drive wheel (15, 31) and the spring (8, 9) on the hub (16, 32) which carries a groove (14, 35).

16. Overload safety device according to any one of Claims 1 to 11, where the coupling elements are seated in the form of two toothed rims on two coaxial shaft ends, characterised in that the displaceable toothed rim (26) mounted on its associated shaft (22) bears with its end face remote from the toothing (26a) upon the spring (28), which in turn bears on an axially fixed retaining ring (30).

17. Overload safety device according to Claim 16, characterised in that the toothed ring (24) non-displaceably connected with its shaft (21) comprises a sleeve (23) which grasps over the other toothed rim (26) and in which the retaining ring (30) and the groove (23a) are arranged.

18. Overload safety device according to any one of the preceding Claims, characterised in that the pressing is effected by at least one dished spring (8, 9).

19. Overload safety device according to any one of the preceding Claims, characterised in that the coupling toothing (1a, 2a; 15a, 16a; 24a, 26a; 31a, 32a; 15a, 41a) is a surface toothing.

20. Overload safety device according to any one of the preceding Claims, characterised in that an interlayer (18) with low friction value is arranged between the coupling toothings (15a, 16a).

21. Overload safety device according to Claim 20, characterised in that the interlayer (18) consists of polytetrafluoroethylene.

22. Overload safety device according to any one of the preceding Claims, characterised in that a ring (13) of a material which melts even at low temperature is arranged between the parts (11, 15) which rotate in relation to one another in the uncoupled condition.

23. Overload safety device according to Claim 22, characterised in that the ring (13) consists of solder.

24. Overload safety device according to Claim 22, characterised in that the ring (13) consists of synthetic plastics material.

25. Overload safety device according to any one of Claims 1 to 19 and 22 to 24, characterised in that the toothing (15a, 41a) of the coupling elements (15, 41) consists of butting faces inclined in the circumferential direction, on the adjacent faces, between which rolling bodies (48) are arranged.

26. Overload safety device according to Claim 25, characterised in that a cage ring (47) holding the rolling bodies (48) is arranged between the coupling elements (15, 41).

## Revendications

1. Dispositif de sécurité contre les surcharges en forme d'un accouplement par formes complémentaires se dégageant lors du dépassement d'un couple déterminé, constitué par deux éléments d'accouplement disposés coaxialement et présentant sur leurs surfaces frontales tournées l'une vers l'autre une denture donnant naissance à une composante de force axiale lors de la transmission du couple de rotation, et dont au moins l'un est déplacable axialement et est maintenu en prise avec l'autre par une force élastique, la force élastique agissant par l'intermédiaire d'une bague à encliquetage déplaçable axialement sur l'élément d'accouplement déplaçable et passant brusquement, après une course de dégagement dont la longueur est au plus égale à la profondeur d'interpénétration des dentures, dans une position supprimant la pression entre les éléments d'accouplement, caractérisé par le fait que la bague à encliquetage (11, 27, 34, 42) est élastique dans le sens radial et se'enclenche dans la position de dégagement en arrière d'un épaulement annulaire (14, 23a, 35) d'un élément d'accouplement dans une position interrompant la transmission de force entre l'élément d'accouplement déplaçable (2, 15, 26, 31, 45) et un ressort de pression distinct (8, 9, 28).

2. Dispositif de sécurité contre les surcharges suivant la revendication 1, caractérisé en ce que ladite bague d'encliquetage est une bague élastique fendue (11, 27).

3. Dispositif de sécurité contre les surcharges suivant la revendication 2, caractérisé en ce que l'épaulement est formé par une gorge (14, 23a, 35).

4. Dispositif de sécurité contre les surcharges suivant la revendication 1, caractérisé en ce que la baque d'encliquetage (42) présente de nombreux segments de ressort (42a) qui s'étendent à peu près axialement et sont susceptibles d'être mis sous tension dans le sens radial.

5. Dispositif de sécurité contre les surcharges suivant l'une quelconque des revendications précédents, caractérisé en ce que la bague à encliquetage (11, 27, 34, 42) est susceptible de s'enclencher dans un élément d'accouplement (4, 16, 23, 32, 40) contre lequel s'appuie la force de réaction du ressort (8, 9, 28).

6. Dispositif de sécurité contre les surcharges suivant l'une quelconque des revendications précédentes, caractérisé en ce que la bague à encliquetage (11, 27, 42) dans sa position enclenchée transmet la force de pression des ressorts (8, 9, 28) à l'épaulement annulaire (14, 23a) de l'élément d'accouplement (4, 23, 40).

7. Dispositif de sécurité contre les surcharges suivant l'une quelconque des revendications I à 5, caractérisé en ce que la profondeur radiale d'enlenchement est dimensionnée de telle sorte que la bague à encliquetage (34, 42, 11) s'échappe de sa liaison active axiale avec au moins l'un de ses deux éléments axiaux voisins (31, 33 ; 43, 45) et dégage à cet élément un espace pour son mouvement axial.

8. Dispositif de sécurité contre les surcharges suivant la revendication 7, caractérisé en ce que l'élément (45) voisin de la bague d'encliquetage (11) présente un évidement (45a) et en ce que le diamètre de ladite bague, dans sa position non enclenchée, est plus grand et, dans sa position enclenchée, plus petit que le diamètre extérieur de l'évidement (45a).

9. Dispositif de sécurité contre les surcharges suivant l'une quelconque des revendications précédentes, caractérisé en ce que la bague à encliquetage (42) et l'élément (43) qui lui est voisin présentent des surfaces de contact obliques pour faciliter le mouvement de'enclenchement.

10. Dispositif de sécurité contre les surcharges suivant la revendication 9, caractérisé en ce que ladite bague est un anneau fendu plat et en forme de band (34).

11. Dispositif de sécurité contre les surcharges suivant la revendication 10, caractérisé en ce que ladite bague (34) est en acier à ressort roulé.

12. Dispositif de sécurité contre les surcharges suivant l'une quelconque des revendications précédentes, dans lequel l'un des éléments de l'accouplement a la forme d'un pignon menant pouvant tourner sur un moyeu, caractérisé en ce que l'autre élément de l'accouplement est une bague d'entraînement (2, 45) en prise par sa surface annulaire dentée avec le pignon (1), solidaire en rotation avec le moyeu, mais est déplaçable axialement sur ledit moyeu (4) et pressée axialement par les ressorts (8, 9) contre le pignon (1).

13. Dispositif de sécurité contre les surcharges suivant la revendication 12, caractérisé en ce que la bague d'enliquetage (11) est disposée entre la bague d'entraînement (2, 45) et les ressorts (8, 9) sur le moyeu (4) pourvu d'une gorge (14).

14. Dispositif de sécurité contre les surcharges suivant l'une quelconque des revendications 1 à 11 dans lequel l'un des élements de l'accouplement a la forme d'un moyeu et l'autre d'un pignon menant disposé sur ce dernier, caractérisé en ce que le pignon (15, 31) est monté sur le moyeu (16, 32) de manière à pouvoir tourner et à se déplacer axialement et il est pressé par les ressorts (8, 9) pour que sa denture (15a, 31a) coagisse avec la denture d'un flasque (16) du moyeu.

15. Dispositif de sécurité contre les surcharges suivant la revendication 14, caractérisé en ce que la bague à encliquetage (11, 34) est disposée entre le pignon (15, 31) et les ressorts (8, 9) sur le moyeu (16, 32) pourvu d'une gorge (14, 35).

16. Dispositif de sécurité contre les surcharges suivant l'une quelconque des revendications 1 à 11, dans lequel les éléments d'accouplement en forme de deux couronnes dentées se situent sur les extrémités de deux arbres coaxiaux, caractérisé en ce que la couronne dentée (26) déplaçable et montée sur son axe correspondant (22) prend appui par sa face frontale éloignée de sa denture (26a) contre le ressort (28) qui s'appuie à son tour contre une bague de maintien (30) fixée axialement.

17. Dispositif de sécurité contre les surcharges suivant la revendication 16, caractérisé en ce que la couronne dentée (24) solidaire de son arbre (21), mais non déplaçable sur ce dernier, présente un manchon (23) qui s'étend sur l'autre couronne dentée (26) et dans lequel sont disposées la bague de maintien (30) ainsi que la gorge (23a).

18. Dispositif de sécurité contre les surcharges suivant l'une quelconque des revendications précédentes, caractérisé en ce que la pression de contact est obtenue à l'aide d'au moins un ressort à disques (8, 9).

19. Dispositif de sécurité contre les surcharges suivant l'une quelconque des revendications précédentes, caractérisé en ce que la denture de l'accouplement (1a, 2a; 15a, 16a; 31a, 32a) est une denture plane.

20. Dispositif de sécurité contre les surcharges suivant l'une quelconque des revendications précédentes, caractérisé en ce qu'une garniture intermédiaire (18) à faible coefficient de frottement est disposée entre la denture de l'accouplement (15a, 16a).

21. Dispositif de sécurité contre les surcharges suivant la revendication 20, caractérisé en ce que la garniture intermédiaire (18) est faite avec du polytétrafluoroéthylène.

22. Dispositif de sécurité contre les surcharges suivant l'une quelconque des revendications précédentes, caractérisé en ce qu'entre les éléments (11, 15) tournant l'un par rapport à l'autre á l'état débrayé est disposée une bague (13) en un matériau fondant à basse température.

23. Dispositif de sécurité contre les surcharges suivant la revendication 22, caractérisé en ce que la bague (13) est faite avec un matériau de soudure.

24. Dispositif de sécurité contre les surcharges suivant la revendication 22, caractérisé en ce que la bague (13) est faite avec une matière plastique.

25. Dispositif de sécurité contre les surcharges suivant l'une ou l'autre des revendications 1 à 19 et 22 à 24, caractérisé en ce que les dentures (15a, 41a) des éléments de l'accouplement (15, 41) consistent en des surfaces de démarrage inclinées dans le sens circonférential ménagées sur les côtés frontaux voisins, entre lesquelles sont disposés des galets (48).

26. Dispositif de sécurité contre les surcharges suivant la revendication 25, caractérisé en ce qu'une cage annulaire (47) maintenant les galets (48) est disposée entre les éléments de l'accouplement (15, 41).

0·001 409

## Fig. 1

## Fig. 2

1

0 001 409

Fig. 3

Fig. 4

2

Fig. 5

Fig. 6

3